# EUROPÄISCHE PATENTANMELDUNG

(11) **EP 1 752 312 A2**
(43) Veröffentlichungstag der Anmeldung: **14.02.2007**
(21) Anmeldenummer: 06014436.7
(22) Anmeldetag: 12.07.2006
(51) Int. Cl.: B60B 3/14

(54) **Hinterradaufhängung für Motorräder**

(30) Priorität: 12.08.2005 DE 102005038173
(71) Anmelder: Bayerische Motoren Werke Aktiengesellschaft, 80809 München (DE)
(72) Erfinder: Theobald, Markus, 85764 München (DE)

(57) **Zusammenfassung**

Motorrad, mit
• einer Hinterradschwinge (2),
• einem Hinterradträger (7), der drehbar an der Hinterradschwinge (2) gelagert ist und der einen seitlichen Hinterradträgerflansch (7b) aufweist,
• einem Hinterrad (8), mit einer Hinterradfelge (9), die einen Felgenflansch (10,11) aufweist, wobei die Hinterradfelge mit ihrem Felgenflansch von einer Seite her mittels mehrere Schrauben, die sich in einer Querrichtung des Motorrads erstrecken, an den Hinterradträgerflansch (7b) angeschraubt ist.

Die Hinterradfelge (9) weist auf jeder ihrer beiden Seiten einen Felgenflansch (10,11) auf. Die Hinterradfelge (9) kann somit wahlweise mit dem einen Felgenflansch (10) oder mit dem anderen Felgenflansch (11) an den Hinterradträgerflansch (7b) angeschraubt werden.

## Beschreibung

Die vorliegende Erfindung betrifft ein Motorrad gemäß dem Oberbegriff des Patentanspruches 1.

Bei Motorrädern, die mit einer "zweiarmigen" Hinterradschwinge ausgerüstet sind, ist das Hinterrad häufig mittels einer "Steckachse" gelagert. Zur Demontage des Hinterrads muss eine Mutter der Steckachse gelöst werden. Anschließend kann die Steckachse seitlich aus der Radnarbe und der Hinterradschwinge herausgezogen werden. Wenn die Kette abgenommen ist, kann das Hinterrad nach hinten aus der Hinterradschwinge herausgezogen werden.

Bei vielen Motorräder der Marke BMW, die mit einer Einarmschwinge ausgerüstet sind, ist das Hinterrad mit mehreren Schrauben von der Seite her mit seinem Felgenflansch an einen "Hinterradträgerflansch" der Hinterradschwinge angeschraubt. Beim Ausbau des Hinterrads müssen, ähnlich wie bei einem Auto, lediglich die von der Seite her eingeschraubten Schrauben gelöst werden. Anschließend kann das Hinterrad vom Hinterradträgerflansch seitlich abgenommen werden.

Bei Geländemotorrädern fahren sich die Stollen des Hinterradreifens bei Fahrten im Gelände relativ schnell ab. Die Abnutzung des Hinterradreifens erfolgt entsprechend der Drehrichtung des Hinterradreifens ungleichförmig. Wenn der Hinterradreifen in einer Drehrichtung abgefahren ist, kann das Hinterrad ausgebaut und der Hinterradreifen in umgekehrter Drehrichtung wieder montiert werden. Dann kann mit demselben Reifen weitergefahren werden. Da das Hinterrad ausgebaut werden muss, der Reifen von der Felge demontiert und in umgekehrter Drehrichtung wieder montiert und anschließend das Hinterrad wieder eingebaut werden muss, ist dies jedoch mit erheblichem Arbeitsaufwand verbunden. Ferner besteht die Gefahr, dass durch unsachgemäße Montage bzw. Demontage des Reifens die Felge beschädigt wird.

Aufgabe der Erfindung ist es, ein Motorrad zu schaffen, bei dem die Laufrichtung des Hinterradreifens in einfacher Weise umgekehrt werden kann und die eingangs geschilderten Probleme vermieden werden.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht darin, die Hinterradfelge so zu gestalten, dass sie wahlweise in der einen Laufrichtung drehend oder, um 180° gedreht, in der anderen Laufrichtung drehend an der Hinterradschwinge montiert werden kann.

Ausgangspunkt der Erfindung ist ein Motorrad, insbesondere ein Geländemotorrad, mit einer Hinterradschwinge, einem "Hinterradträger" und einem Hinterrad mit einer Hinterradfelge. Unter dem Begriff "Hinterradträger" ist dasjenige Bauteil zu verstehen, an dem die Hinterradfelge fixiert wird. Der Hinterradträger ist an der Hinterradschwinge drehbar gelagert und weist einen seitlichen Hinterradträgerflansch auf. Über den Hinterradträger wird das Hinterrad angetrieben. Die Hinterradfelge weist einen Felgenflansch auf und ist mit dem Felgenflansch von einer Seite her mittels mehrerer Schrauben, die sich in einer Querrichtung des Motorrads erstrecken, an den Hinterradträgerflansch angeschraubt.

Wie bereits angedeutet, besteht der Kern der Erfindung darin, dass die Hinterradfelge auf jeder ihrer beiden Seiten einen Felgenflansch aufweist, so dass die Hinterradfelge wahlweise mit dem einen oder mit dem dem einen Felgenflansch gegenüberliegenden anderen Felgenflansch an den Hinterradträgerflansch angeschraubt werden kann.

Im Unterschied zum Stand der Technik braucht bei einem einseitig abgefahrenen Hinterradreifen das Hinterrad also lediglich ausgebaut, um 180° gedreht und dann wieder eingebaut werden. Da das Hinterrad seitlich an den Hinterradträgerflansch angeschraubt ist, kann dies innerhalb weniger Minuten erledigt werden und zwar ohne dass eine Reifenwerkstatt aufgesucht werden muss.

Nach einer Weiterbildung der Erfindung ist vorgesehen, dass die Hinterradfelge eine gerade Anzahl von Durchgangsbohrungen aufweist, die in einer Umfangsrichtung der Hinterradfelge voneinander um gleiche Winkel beabstandet sind. Es können beispielsweise insgesamt sechs Durchgangsbohrungen vorgesehen sein. Die Hälfte der Durchgangsbohrungen ist einer ersten Gruppe von Durchgangsbohrungen und der Rest der Durchgangsbohrungen ist einer zweiten Gruppe von Durchgangsbohrungen zugeordnet. In Umfangsrichtung der Hinterradfelge gesehen folgt stets eine Durchgangsbohrung der einen Gruppe auf eine Durchgangsbohrung der anderen Gruppe usw.

Ferner kann vorgesehen sein, dass die eine Gruppe von Durchgangsbohrungen auf der Seite des einen Felgenflanschs angefast ist und die andere Gruppe von Durchgangsbohrungen auf der Seite des anderen Felgenflanschs angefast ist.

Wenn die Hinterradfelge sechs Durchgangsbohrungen aufweist, kann vorgesehen sein, dass drei der Durchgangsbohrungen für die Montage in der einen Laufrichtung und die anderen drei der Durchgangsbohrungen für die Montage in der anderen Laufrichtung vorgesehen sind.

Nach einer Weiterbildung der Erfindung weist der Hinterradträger einen Wellenabschnitt auf, der mit dem Hinterradträgerflansch verbunden ist. Der Wellenabschnitt und der Hinterradträgerflansch können einstückig miteinander verbunden sein. Sie können in Form eines Gussteils hergestellt sein. Vorzugsweise ist der Wellenabschnitt des Hinterradträgerflanschs als Hohlwelle ausgebildet, wodurch sich ein geringes Bauteilgewicht erreichen lässt.

Für den Antrieb des Hinterrads kann ein Kardanantrieb, ein Kettentrieb oder ein Riementrieb vorgesehen sein, welcher das Antriebsdrehmoment auf den Hinterradträger und vom Hinterradträger auf das Hinterrad überträgt. Im Falle eines Kettenantriebs oder Riemenantriebs kann auf dem Wellenabschnitt des Hinterradträgers ein Kettenradträger oder ein Riemenradträger drehfest angeordnet sein. Auf dem Kettenradträger bzw. auf dem Riemenradträger ist dann ein zugeordnetes Kettenrad bzw. Riemenrad angeordnet, welches von einer Antriebskette bzw. einem Antriebsriemen angetrieben wird.

Das mit dem Wellenabschnitt drehfest verbundene "Trägerelement" kann zusätzlich zu seiner Funktion als Ketten- bzw. Riemenradträger auch als Bremsscheibenträger fungieren.

Nach einer Weiterbildung der Erfindung ist eine Exzenteranordnung vorgesehen, mittels der der Hinterradträger verstellt und die Spannung der Antriebskette bzw. des Antriebsriemens eingestellt werden kann. Hierzu weist die Hinterradschwinge eine kreiszylindrische Ausnehmung auf. In die Ausnehmung ist ein Exzenterelement eingesetzt, das an seiner Außenseite entsprechend der Ausnehmung kreiszylindrisch gestaltet ist. Das Exzenterelement weist ein in Bezug auf seinen Außenumfang exzentrisches Loch bzw. eine exzentrische Bohrung auf, in dem bzw. in der der Wellenabschnitt des Hinterradträgers gelagert ist. Durch Verdrehen des Exzenterelements in der kreiszylindrischen Ausnehmung der Hinterradschwinge kann die Spannung der Antriebskette bzw. des Antriebsriemens variiert werden.

Zum Verdrehen des Exzenterelements können in dem Exzenterelement mehrere in Umfangsrichtung voneinander beabstandete radiale Bohrungen vorgesehen sein, die über eine in der Hinterradschwinge vorgesehene Ausnehmung, welche sich über einen Umfangsabschnitt des Exzenterelements erstreckt, zugänglich sind. Die Verstellung des Exzenterelements kann in einfacher Weise mittels eines Steckschlüssels erfolgen, der über die in der Hinterradschwinge vorgesehene Ausnehmung von außen her in eine der radialen Bohrungen eingesteckt wird. Mittels des Steckschlüssels kann dann das Exzenterelement leicht in Umfangsrichtung verdreht werden.

Im folgenden wird die Erfindung im Zusammenhang mit der Zeichnung näher erläutert. Es zeigen:
- Figur 1: einen Querschnitt durch eine Hinterradlagerung gemäß der Erfindung;
- Figur 2: einen Längsschnitt durch eine Hinterradlagerung gemäß der Erfindung.

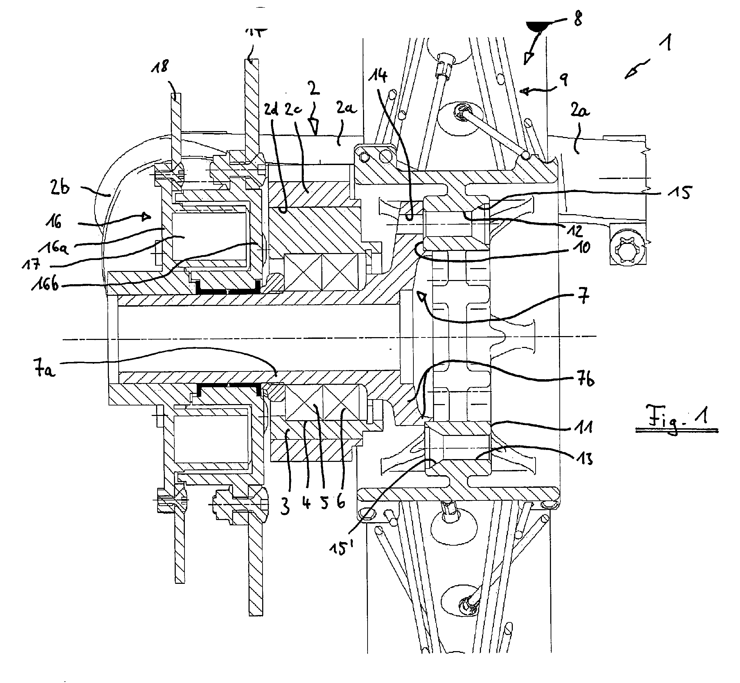

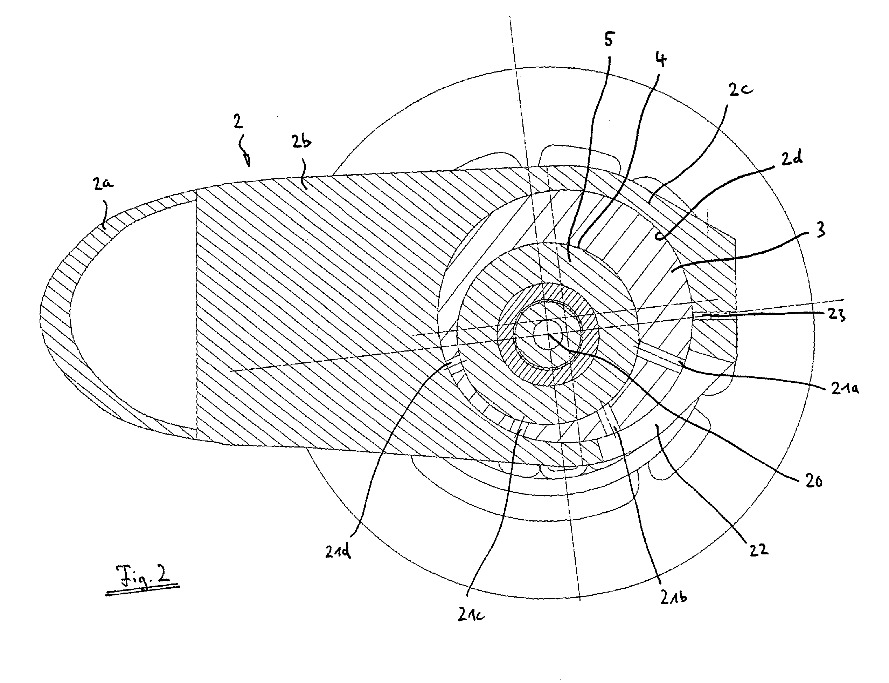

Figur 1 zeigt einen Axialschnitt durch eine Hinterradlagerung 1 eines Motorrads. Die Hinterradlagerung 1 weist eine Hinterradschwinge 2 auf, die hier als Einarmschwinge ausgebildet ist. Ein "vorderer" Abschnitt 2a der Hinterradschwinge ist in einem Bereich hinter dem Motor (nicht dargestellt) des Motorrads am Rahmen (nicht dargestellt) des Motorrads gelagert. Von dem Abschnitt 2a erstreckt sich ein Schwingenarm 2b nach hinten in den Bereich des Hinterrads und bildet dort einen hinteren Abschnitt 2c, der eine kreiszylindrische Ausnehmung 2d aufweist. In die Ausnehmung 2d ist ein Exzenterelement 3 eingesetzt, das einen kreiszylindrischen Außenumfang aufweist, wobei der Radius des Außenumfangs der Ausnehmung 2d entspricht. Das Exzenterelement 3 weist, wie am besten aus Figur 2 ersichtlich ist, eine in Bezug auf seinen Außenumfang exzentrische Bohrung 4 auf, in der mittels eines Wälzlagerpaares 5, 6 ein Hohlwellenabschnitt 7a eines Hinterradträgers 7 gelagert ist. Der Hinterradträger 7 weist einen einstückig mit dem Hohlwellenabschnitt 7a verbundenen Hinterradträgerflansch 7b auf.

Ferner ist ein Hinterrad 8 vorgesehen, das hier eine Speichenfelge 9 mit einem ersten Felgenflansch 10 und einem zweiten Felgenflansch 11 aufweist. Die Speichenfelge 8 weist bei dem hier gezeigten Ausführungsbeispiel insgesamt sechs gleichmäßig in Umfangsrichtung verteilt angeordnete Durchgangsbohrungen auf, von denen hier lediglich die beiden Bohrungen 12, 13 zu sehen sind. Drei der sechs Durchgangsbohrungen sind entsprechend der Bohrung 12 auf der Seite des Flanschs 11 angefast. Die anderen drei Bohrungen sind entsprechend der Bohrung 13 auf der Seite des Felgenflanschs 10 angefast.

Der Hinterradträgerflansch 7 weist bei dem hier gezeigten Ausführungsbeispiel drei in Umfangsrichtung voneinander um 120° beabstandete Gewindebohrungen 14 auf.

Das Hinterrad 8 kann in zwei verschiedenen Laufrichtungen auf dem Hinterradträgerflansch 7b montiert werden. Bei der in Figur 1 gezeigten Montageposition des Hinterrads 8 liegt der Felgenflansch 10 an dem Hinterradträgerflansch 7b an. Das Hinterrad 8 ist dabei mit drei Schrauben (nicht dargestellt) von der Seite her an den Hinterradträgerflansch 7b angeschraubt. Die Schraubenköpfe werden dabei durch Anfasungen 15, die auf der Seite des Felgenflanschs 11 liegen, zentriert. Wenn das Hinterrad 8 in umgekehrter Laufrichtung montiert wird, liegt der Felgenflansch 11 an dem Hinterradträgerflansch 7b an. Das Hinterrad 8 wird dann ebenfalls mittels dreier Schrauben von der Seite her angeschraubt. Auch die Durchgangsbohrungen 13 weisen Anfasungen 15' auf, wobei diese jedoch auf der Seite des Felgenflanschs 10 liegen.

Die Speichenfelge 8 muss nicht notwendigerweise zwei Gruppen 12, 13 von Durchgangsbohrungen aufweisen, wie dies bei dem in Figur 1 gezeigten Ausführungsbeispiel der Fall ist. Selbstverständlich können auch beispielsweise insgesamt nur drei Durchgangsbohrungen vorgesehen sein, die sowohl für die Montage in der einen Laufrichtung als auch für die Montage in der anderen Laufrichtung vorgesehen sind.

Wie aus Figur 1 ersichtlich ist, ist auf dem Hohlwellenabschnitt 7a des Hinterradträgers 7 ein Trägerelement 16 drehfest angeordnet. Das Trägerelement 16 weist ein erstes Teil 16a und ein zweites Teil 16b auf, die durch mehrere in Umfangsrichtung voneinander beanstandete Gummielemente 17, welche als Drehschwingungsdämpfer fungieren, voneinander beabstandet sind. Das Trägerelement 16a fungiert als Bremsscheibenträger. An dem Trägerelement 16a ist eine Bremsscheibe 18 festgeschraubt. Das Trägerelement 16b fungiert als Kettenradträger. An dem Trägerelement 16b ist ein Kettenrad 19 festgeschraubt. Über das Kettenrad 19 wird Antriebsdrehmoment in den Hinterradträger 7 eingeleitet und von dem Hinterradträger 7 auf das Hinterrad 8 übertragen.

Das bereits erwähnte Exzenterelement 3 ermöglicht eine Verstellung der Spannung einer das Hinterrad 8 antreibenden Kette bzw. eines das Hinterrad 8 antreibenden Riemens. Durch Verdrehen des Exzenterelements 3 der Ausnehmung 2d verändert sich die Lage der Mittelachse 20 des Hinterrads 8 und somit auch die Lager der Mittelachse des Kettenrads 19. Um eine Verdrehung des Exzenters 3 zu erleichtern, sind in dem Exzenter 3 in Umfangsrichtung verteilt mehrere Bohrungen 21a-21d angeordnet (Fig. 2). In dem Abschnitt 2c der Hinterradschwinge 2 ist eine sich über eine in Umfangsrichtung erstreckende Zugangsöffnung 22 vorgesehen. Über die Zugangsöffnung 22 kann ein Steckschlüssel in eine der Radialbohrungen 21 a oder 21 b eingeführt werden. Mittels eines solchen Steckschlüssels kann dann der Exzenter 3 in einfacher Weise in der Ausnehmung 2d verdreht und die Spannung der Kette bzw. des Antriebsriemens verändert werden. Die eingestellte Position des Exzenters 3 kann dann z. B. mittels einer Madenschraube, die in eine radiale Gewindebohrung 23 der Hinterradschwinge 2 eingeschraubt wird, festgestellt werden. Selbstverständlich ist auch eine anderweitige Sicherung der eingestellten Exzenterposition denkbar.

## Patentansprüche

1. Motorrad, mit
• einer Hinterradschwinge (2),
• einem Hinterradträger (7), der drehbar an der Hinterradschwinge (2) gelagert ist und der einen seitlichen Hinterradträgerflansch (7b) aufweist,
• einem Hinterrad (8), mit einer Hinterradfelge (9), die einen Felgenflansch (10, 11) aufweist, wobei die Hinterradfelge (9) mit ihrem Felgenflansch (10, 11) von einer Seite her mittels mehrerer Schrauben, die sich in einer Querrichtung des Motorrads erstrecken, an den Hinterradträgerflansch (7b) angeschraubt ist,
**dadurch gekennzeichnet, dass**
die Hinterradfelge (9) auf jeder ihrer beiden Seiten einen Felgenflansch (10, 11) aufweist, so dass die Hinterradfelge (9) wahlweise mit dem einen Felgenflansch (10) oder mit dem dem einen Felgenflansch (10) gegenüberliegenden anderen Felgenflansch (11) an den Hinterradträgerflansch (7b) angeschraubt werden kann.

2. Motorrad nach Anspruch 1, **dadurch gekennzeichnet, dass** die Hinterradfelge (9) eine gerade Anzahl von in einer Umfangsrichtung der Hinterradfelge (9) voneinander beabstandeten Durchgangsbohrungen (12; 13) aufweist, wobei ein Teil der Durchgangsbohrungen (12) einer ersten Gruppe und der Rest der Durchgangbohrungen (13) einer zweiten Gruppe von Durchgangsbohrungen zugeordnet ist, und wobei, in Umfangsrichtung der Hinterradfelge (9) gesehen, stets eine Durchgangsbohrung (12) der einen Gruppe von Durchgangsbohrungen von einer Durchgangsbohrung (13) der anderen Gruppe von Durchgangsbohrungen gefolgt ist.

3. Motorrad nach Anspruch 2, **dadurch gekennzeichnet, dass** die eine Gruppe von Durchgangsbohrungen (12) auf der Seite des einen Felgenflanschs (11) angefast ist und die andere Gruppe von Durchgangsbohrungen (13) auf der Seite des anderen Felgenflanschs (10) angefast ist.

4. Motorrad nach einem der Ansprüche 1 bis 3, **dadurch gekennzeichnet, dass** der Hinterradträger (7) einen Wellenabschnitt (7a) aufweist, der mit dem Hinterradträgerflansch (7b) verbunden ist.

5. Motorrad nach Anspruch 4, **dadurch gekennzeichnet, dass** der Wellenabschnitt (7a) mit dem Hinterradträgerflansch (7b) verbunden ist.

6. Motorrad nach einem der Ansprüche 4 oder 5, **dadurch gekennzeichnet, dass** der Wellenabschnitt (7a) ein Hohlwellenabschnitt ist.

7. Motorrad nach einem der Ansprüche 4 bis 6, **dadurch gekennzeichnet, dass** mit dem Wellenabschnitt (7a) ein mit einem Zugmittel, insbesondere einer Antriebskette oder einem Antriebsriemen, zusammenwirkendes Antriebsrad (19) drehfest verbunden ist.

8. Motorrad nach einem der Ansprüche 4 bis 7, **dadurch gekennzeichnet, dass** mit dem Wellenabschnitt (7a) eine Bremsscheibe (18) drehfest verbunden ist.

9. Motorrad nach Anspruch 8, **dadurch gekennzeichnet, dass** mit dem Wellenabschnitt (7a) ein Trägerelement (16), auf dem die Bremsscheibe (18) und das Antriebsrad (19) angeordnet sind, drehfest verbunden ist.

10. Motorrad nach einem der Ansprüche 1 bis 9, **dadurch gekennzeichnet, dass** der Wellenabschnitt (7a) mittels mindestens eines Wälzlagers (5, 6) in der Hinterradschwinge (2) gelagert ist.

11. Motorrad nach einem der Ansprüche 1 bis 10, **dadurch gekennzeichnet, dass** die Hinterradschwinge (2) eine kreiszylindrische Ausnehmung (2d) aufweist, in die ein an seiner Außenseite kreiszylindrisches Exzenterelement (3) eingesetzt ist, welches ein in Bezug auf seine Außenseite exzentrisch angeordnetes kreiszylindrisches Loch (4) aufweist, in dem der Wellenabschnitt (7a) des Hinterradträgers (7) gelagert ist.

12. Motorrad nach Anspruch 11, **dadurch gekennzeichnet, dass** der Wellenabschnitt (7a) in dem Exzenterelement (3) mittels Wälzlagern (5, 6) gelagert ist.

13. Motorrad nach einem der vorangehenden Ansprüche, **dadurch gekennzeichnet, dass** das Exzenterelement (3) mehrere radiale Bohrungen (21 a-21 d) aufweist.

14. Motorrad nach einem der vorangehenden Ansprüche, **dadurch gekennzeichnet, dass** in der Hinterradschwinge (2) eine sich in einer Umfangsrichtung des Exzenterelements (3) zu erstreckende Ausnehmung (22) vorgesehen ist, über welche die radialen Bohrungen (21 a-21d), die in dem Exzenterelement (3) vorgesehen sind, zugänglich sind.
